# EUROPÄISCHE PATENTANMELDUNG

(11) **EP 1 491 404 A1**
(43) Veröffentlichungstag der Anmeldung: **29.12.2004**
(21) Anmeldenummer: 04014654.0
(22) Anmeldetag: 23.06.2004
(51) Int. Cl.: B60R 11/00, B60R 11/04, B60R 11/02

(54) **Befestigungselement auf dem Windschutzscheibe**

(30) Priorität: 25.06.2003 DE 10328468
(71) Anmelder: AUDI AG, 85045 Ingolstadt (DE); Kronowetter Kunststoff- und Metalltechnik GmbH, 83482 Bischofswiesen (DE)
(72) Erfinder: Gärtner, Jürgen, 74081 Heilbronn (DE); Kronowetter, Bernd, 83471 Berchtesgaden (DE)
(74) Vertreter: Mader, Wilfried

(57) **Zusammenfassung**

Zur Befestigung von Bauteilen an der Fensterscheibe eines Kraftfahrzeugs ist ein durch Kleben mit der Fensterscheibe des Kraftfahrzeugs verbundenes, das Bauteil aufnehmendes Befestigungselement aus Kunststoff vorgesehen.

## Beschreibung

Die Erfindung betrifft ein Befestigungselement gemäß dem Oberbegriff des Patentanspruchs 1.

Verschiedene Bauteile eines Kraftfahrzeugs, bsp. mechanische Bauteile wie Spiegel oder elektronische Bauteile wie Sensoren, können mittels eines Befestigungselements aus Sintermetall an eine Fensterscheibe des Kraftfahrzeugs (bsp. an die Frontscheibe des Kraftfahrzeugs) geklebt werden. Diese Befestigungselemente sind jedoch schwer und kostspielig und aufgrund ihres Herstellungsverfahrens in der Variabilität und damit hinsichtlich des Einsatzbereichs stark eingeschränkt.

Der Erfindung liegt die Aufgabe zugrunde, ein Befestigungselement anzugeben, bei dem diese Nachteile vermieden werden.
Diese Aufgabe wird erfindungsgemäß durch die Merkmale im Kennzeichen des Patentanspruchs 1 gelöst.
Vorteilhafte Ausgestaltungen der Erfindung sind Bestandteil der weiteren Patentansprüche.

Erfindungsgemäß ist das zur Aufnahme des Bauteils dienende Befestigungselement als Kunststoffteil ausgebildet; der Kunststoff weist hierbei spezielle Eigenschaften auf, insbesondere bezüglich der mechanischen Festigkeit und der Temperaturbeständigkeit, wozu bsp. aus Polyamid PA bestehende Kunststoffe (ggf. mit entsprechenden Füllstoffen versehen) oder Kunststoffe mit ähnlichen thermischen und mechanischen Eigenschaften wie Polyamid herangezogen werden. Die an der Fensterscheibe des Kraftfahrzeugs zu befestigenden (mechanischen oder elektronischen) Bauteile werden auf geeignete Weise auf das Befestigungselement aufgebracht (das Befestigungselement dient hier als Art Trägerkörper) oder in das Befestigungselement integriert und bezüglich dem Befestigungselement positioniert; bsp. wird das Bauteil mittels einer Haltevorrichtung auf das Befestigungselement gedrückt oder/und mit dem Befestigungselement verrastet. Die Befestigung des Befestigungselements auf der Fensterscheibe des Kraftfahrzeugs erfolgt mittels eines hierzu geeigneten Verfahrens, insbesondere mittels eines Klebeverfahrens unter Verwendung einer bsp. mittels einer Klebefolie oder eines Klebers auf Polyurethan (PU) Basis realisierten Klebeschicht.
Das als Kunststoffteil ausgebildete Befestigungselement kann auf einfache Weise (bsp. mittels eines Spritzgussverfahrens), mit geringen Kosten und mit geringem Gewicht hergestellt werden und flexibel mit der gewünschten (beliebigen) Form mit hoher Wiederholgenauigkeit gefertigt werden. Bei der Realisierung des Befestigungselements können Hinterschnitte im Kunststoff vorgesehen werden; hierdurch ist eine Vergrößerung der durch das Befestigungselement bereitgestellten Befestigungsfläche möglich, d.h. es kann eine große Klebefläche für die (zuverlässige) Befestigung des Befestigungselements an der Fensterscheibe des Kraftfahrzeugs beim Klebevorgang bereitgestellt werden. An das Befestigungselement können ohne großen Aufwand zusätzliche Verbindungselemente zur Befestigung weiterer Bauteile oder zur Verbindung des Bauteils mit weiteren Bauteilen angebracht werden, bsp. ebenfalls aus Kunststoff bestehende Clipsverbinder. Desgleichen können in das Befestigungselement weitere Komponenten integriert werden, bsp. zur Verbindung mit weiteren Bauteilen des Kraftfahrzeugs benötigte Komponenten; bsp. kann das Befestigungselement gleichzeitig als Art "Kabelkanal" zur elektrischen Verbindung des vom Befestigungselement aufgenommenen Bauteils mit weiteren Bauteilen fungieren.

Das Befestigungselement ist zur Befestigung unterschiedlicher Bauteile vielfältig einsetzbar; als mechanische Bauteile können bsp. Innenspiegel des Kraftfahrzeugs auf einem als Spiegelklebeplatte ausgebildeten Befestigungselement oder Kameragehäuse auf einem als Trägerkörper ausgebildeten Befestigungselement aufgebracht und befestigt werden, als elektronische Bauteile können bsp. Sensoren wie Lichtsensoren oder Regensensoren oder Antennen in das Befestigungselement integriert oder auf dem Befestigungselement angeordnet werden.

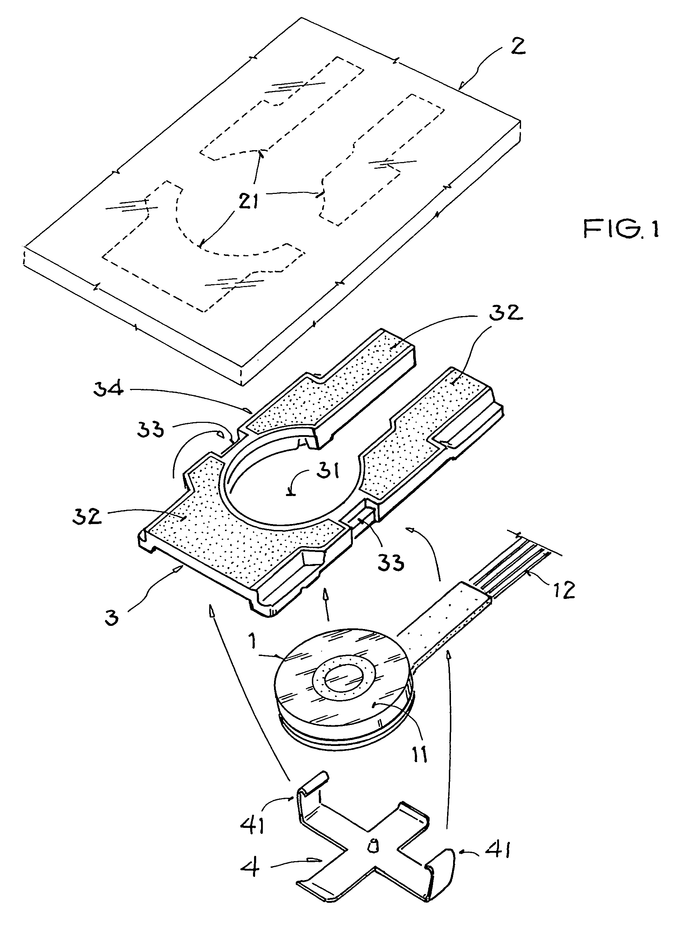

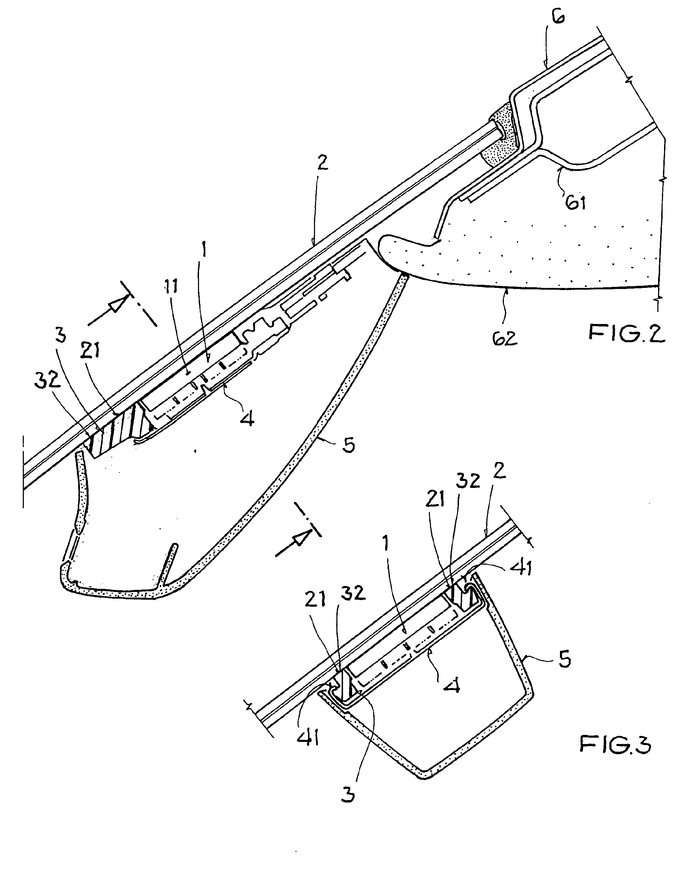

Im Zusammenhang mit der Zeichnung (Figuren 1 bis 3) soll ein Ausführungsbeispiel der Erfindung erläutert werden.
Hierbei zeigt:
- Figur 1: eine Explosionsdarstellung der zur Befestigung eines elektronischen Bauteils an der Windschutzscheibe eines Kraftfahrzeugs benötigten Komponenten,
- Figur 2: eine Schnittdarstellung des an der Windschutzscheibe eines Kraftfahrzeugs befestigten elektronischen Bauteils,
- Figur 3: einen Querschnitt durch die Schnittdarstellung gemäß Figur 2.

Das elektronische Bauteil 1 soll bsp. auf der Fensterscheibe 2 eines Kraftfahrzeugs angeordnet werden, um bsp. als Sensor die Umgebungsverhältnisse des Kraftfahrzeugs zu detektieren; bsp. ist als elektronisches Bauteil 1 ein auf der Windschutzscheibe (Frontscheibe oder Heckscheibe) als Fensterscheibe 2 anzuordnender Regensensor vorgesehen, der die durch die Benetzung der Außenseite der Windschutzscheibe 2 mit Feuchtigkeit hervorgerufenen Änderungen (bsp. bestimmter optischer Eigenschaften) detektiert und ggf. auswertet, so dass entsprechend des Sensorsignals des Regensensors 1 eine Betätigung der Scheibenwischer des Kraftfahrzeugs gesteuert werden kann. Zur Spannungsversorgung des Sensorelements 11 des Regensensors 1 und zur Ansteuerung des Sensorelements 11 sowie zur Weiterleitung des Sensorsignals des Sensorelements 11 ist das Sensorelement 11 über die Sensoranschlüsse 12 mit weiteren Bauteilen des Kraftfahrzeugs verbunden. Das Sensorelement 11 des Regensensors 1 besitzt bsp. einen Durchmesser von 36 mm.
Zur Befestigung des Regensensors 1 auf der Windschutzscheibe 2 ist das aus Kunststoff bestehende Befestigungselement 3 vorgesehen, das als Art Haltering ausgebildet ist und eine Aussparung 31 zur Aufnahme des Regensensors 1 (insbesondere des Sensorelements 11) aufweist; weiterhin sind Klebeflächen 32 zum Verkleben des Befestigungselements 3 an korrespondierenden Klebestellen 21 der Windschutzscheibe 2 vorgesehen sowie an den beiden Längsseiten 34 des Befestigungselements 3 Rastnuten 33 ausgebildet. Das bsp. aus Polyamid PA bestehende Befestigungselement 3 besitzt bsp. eine Länge von 85 mm und eine Breite von 45 mm, die Aussparung 31 bsp. einen Durchmesser von 40 mm. Aufgrund des verwendeten Kunststoffs ist bsp. eine Temperaturbeständigkeit des Befestigungselements 3 im Bereich von - 40 °C bis + 120 °C sowie eine den Anforderungen im Betrieb des Kraftfahrzeugs genügende mechanische Festigkeit gegeben.
Das Sensorelement 11 des Regensensors 1 wird in die Aussparung 31 des Befestigungselements 3 eingelegt und durch das Halteelement 4 fixiert; das bsp. aus Federstahl bestehende Halteelement 4 greift hierzu mit mindestens zwei Haltefedern 41 in die Rastnuten 33 des Befestigungselements 3 ein, so dass das Sensorelement 11 verschiebesicher bezüglich des Befestigungselements 3 positioniert wird. Anschließend wird das Befestigungselement 3 über die Klebeflächen 32 an den Klebestellen 21 der Windschutzscheibe 2 auf die Innenseite der Windschutzscheibe 2 aufgeklebt, bsp. mittels eines Polyurethanklebers. Nach dem Aushärten des Klebers wird eine das Befestigungselement 3 und damit auch den Regeensensor 1 einschließende, sich bis zum Dachhimmel 62 des Dachs 6 bzw. des Dachrahmens 61 des Kraftfahrzeugs erstreckende Abdeckung 5 aufgebracht, die somit den Regensensor 1 und insbesondere das Sensorelement 11 des Regensensors 1 vor äußeren Einflüssen schützt.

## Patentansprüche

1. Befestigungselement (3) zur Befestigung mindestens eines Bauteils (1) an einer Fensterscheibe (2) eines Kraftfahrzeugs,
**dadurch gekennzeichnet,**
**dass** das mit der Fensterscheibe (2) des Kraftfahrzeugs verbundene, das Bauteil (1) aufnehmende Befestigungselement (3) aus Kunststoff besteht.

2. Befestigungselement nach Anspruch 1, **dadurch gekennzeichnet, dass** das Bauteil (1) in einer Aussparung (31) des Befestigungselements (3) angeordnet ist.

3. Befestigungselement nach Anspruch 2, **dadurch gekennzeichnet, dass** das Bauteil (1) in der Aussparung (31) des Befestigungselements (3) (4) verschiebesicher positioniert ist.

4. Befestigungselement nach Anspruch 3, **dadurch gekennzeichnet, dass** das Bauteil (1) in der Aussparung (31) des Befestigungselements (3) mittels eines Halteelements (4) verrastet ist.

5. Befestigungselement nach Anspruch 1, **dadurch gekennzeichnet, dass** das Bauteil (1) auf dem als Trägerkörper dienenden Befestigungselement (3) angeordnet ist.

6. Befestigungselement nach einem der Ansprüche 1 bis 5, **dadurch gekennzeichnet, dass** das Befestigungselement (3) durch Kleben mit der Fensterscheibe (2) des Kraftfahrzeugs verbunden ist.

7. Befestigungselement nach einem der Ansprüche 1 bis 6, **dadurch gekennzeichnet, dass** das Befestigungselement (3) mittels einer Klebefolie mit der Fensterscheibe (2) des Kraftfahrzeugs verbunden ist.

8. Befestigungselement nach einem der Ansprüche 1 bis 6, **dadurch gekennzeichnet, dass** das Befestigungselement (3) mittels eines Klebers auf Polyurethanbasis mit der Fensterscheibe (2) des Kraftfahrzeugs verbunden ist.

9. Befestigungselement nach einem der Ansprüche 1 bis 8 zur Befestigung eines elektronischen Bauteils (1) an der Fensterscheibe (2) eines Kraftfahrzeugs.

10. Befestigungselement nach Anspruch 9 zur Befestigung eines Sensors an der Fensterscheibe eines Kraftfahrzeugs.

11. Befestigungselement nach Anspruch 9 zur Befestigung einer Antenne an der Fensterscheibe eines Kraftfahrzeugs.

12. Befestigungselement nach Anspruch 9 zur Befestigung einer bildverarbeitenden elektronischen Einheit an der Fensterscheibe eines Kraftfahrzeugs.

13. Befestigungselement nach einem der Ansprüche 1 bis 8 zur Befestigung eines mechanischen Bauteils an der Fensterscheibe eines Kraftfahrzeugs.

14. Befestigungselement nach Anspruch 13 zur Befestigung eines Gehäuses für ein Bauteil an der Fensterscheibe eines Kraftfahrzeugs.
